**Europäisches Patentamt**

**European Patent Office**

**Office européen des brevets**

(11) Veröffentlichungsnummer: **0 224 240**
**B1**

(12) **EUROPÄISCHE PATENTSCHRIFT**

(45) Veröffentlichungstag der Patentschrift:
**10.10.90**

(51) Int. Cl.⁵: **B29C 47/92**

(21) Anmeldenummer: **86116333.5**

(22) Anmeldetag: **25.11.86**

(54) Vorrichtung zur Steuerung einer Anlage für die Herstellung von Strangprofilen.

(30) Priorität: **26.11.85 DE 3541680**

(43) Veröffentlichungstag der Anmeldung:
**03.06.87 Patentblatt 87/23**

(45) Bekanntmachung des Hinweises auf die Patenterteilung:
**10.10.90 Patentblatt 90/41**

(84) Benannte Vertragsstaaten:
**AT BE CH DE ES FR GB IT LI NL SE**

(56) Entgegenhaltungen:
**DE-A- 2 730 854**
**DE-A- 2 913 410**
**DE-A- 3 234 126**
**FR-A- 2 143 072**
**FR-A- 2 256 019**
**FR-A- 2 346 680**
**GB-A- 2 058 344**
**US-A- 3 628 025**
**US-A- 3 989 779**
**US-A- 4 154 563**

**INSTRUMENTS & CONTROL SYSTEMS, März 1982,**
**Seiten 45-49; R.W. FAYFIELD: "Fiber optics and**
**photoelectric sensing, a good combination"**

(73) Patentinhaber: **Becker, Bernd, Auf der Kamm 45,**
**D-6746 Hauenstein(DE)**

(72) Erfinder: **Becker, Bernd, Auf der Kamm 45,**
**D-6746 Hauenstein(DE)**

(74) Vertreter: **Ratzel, Gerhard, Dr., Seckenheimer**
**Strasse 36a, D-6800 Mannheim 1(DE)**

## Beschreibung

Die Erfindung betrifft ein Verfahren und eine Vorrichtung zur Steuerung einer einer Anlage für die Herstellung von Strangprofilen, insbesondere Kunststoffprofilen oder dergleichen, die ein Strangpreßwerkzeug und ein diesem im Materialstrom nachgeordnetes Kalibrierwerkzeug enthält, mit einem Meßkopf zur berührungslosen optischen Erfassung eines Materialstaus bzw. Materialaufquellung zwischen der Extrusionsdüse und dem Kalibrierwerkzeug, der in beabstandet einander gegenüberliegender Anordnung eine Lichtsendefläche und einen Lichtempfangsfläche aufweist, wobei wenigstens an letzterer eine Mehrzahl von Lichtleitelementen enden.

Zur Herstellung von Strangpreßprofilen werden Strangpreßwerkzeuge beispielsweise in Form eines Extruders mit zugehöriger Extruderdüse verwendet. Der aus dem Strangpreßwerkzeug austretende Materialstrom wird einem Kalibrierwerkzeug zugeleitet, das die endgültige äußere Form des Strangprofils bestimmt.

Insbesondere kann das Kalibrierwerkzeug eine Öffnung haben, deren Querschnitt im wesentlichen dem der Extruderdüse entspricht oder etwas geringer ist, um eine Formgebungswirkung zu gewährleisten. Im Zwischenraum zwischen der Extruderdüse und dem Kalibrierwerkzeug findet eine Materialaufquellung im Bereich der Extruderdüsenmündung und ein Materialstau vor dem Kalibrierwerkzeug statt.

Der Erfindungsgegenstand dient zur optischen Erfassung dieser Aufquellung bzw. dieses Staus zum Zwecke der Steuerung der Herstellungsanlage.

Stromab vom Kalibrierwerkzeug schließt sich üblicherweise eine Kühleinrichtung und eine Einrichtung zum Abziehen des Strangprofils an. Die Ausbildung der Materialquellung bzw. des Materialstaus vor dem Eingang des Kalibrierwerkzeugs kann zum einen anhand der Geschwindigkeit gesteuert werden, mit der das Strangpreßwerkzeug arbeitet; insbesondere läßt sich die Drehzahl der Extruderschnecke in einem Düsenextruder regeln. Zum anderen besteht die möglichkeit, die Geschwindigkeit zu beeinflussen, mit der die Abzugsvorrichtung arbeitet. In beiden Fällen gilt es, die momentane Größe der Materialaufquellung bzw. des Materialstaus vor dem Eingang des Kalibrierwerkzeugs zu erfassen und mit einem vorgegebenen Sollwert für die Materialaufquellung bzw. den Materialstau zu vergleichen, um so ein Regelsignal zu gewinnen.

Aus der DE-OS 24 33 242 ist eine Vorrichtung zur Erfassung des momentanen Materialstaus vor dem Eingang eines Kalibrierwerkzeugs bekannt, bei der eine mechanische Abtastung des aus dem Strangpreßwerkzeug austretenden Strangprofils erfolgt. In der DE-OS 32 34 126 wird eine berührungslose optische Erfassung des Materialstaus vorgeschlagen, bei der eine Kante des Strangprofils vor dem Kalibrierwerkzeug im Strahlengang zwischen einer Lichtsendefläche und einer Lichtempfangsfläche liegt und eine Messung der Lichtabsorbtion in dem Strangprofil erfolgt. Es wurde auch bereits vorgeschlagen, eine Lichtsendefläche durch eine Mehrzahl darauf endender Lichtleitfasern zu realisieren, die das Licht einer entfernt angeordneten Lichtquelle führen, und auch auf der Lichtempfangsfläche eine Mehrzahl von Lichtleitfasern enden zu lassen, durch die das auftreffende Licht an einen Fotodetektor gelangt. Unter Licht ist in diesem Zusammenhang elektromagnetische Strahlung aus den sichtbaren und benachbarten Spektralbereichen zu verstehen. Vorzugsweise findet Infrarotstrahlung Verwendung, die gegebenenfalls unter Vorschaltung eines Filters mit einer Fotodiode detektiert wird. Als Lichtleitfasern können Glasfasern zum Einsatz kommen.

Aus der FR-PS 2 346 680 ist eine Vorrichtung zur Messung der seitlichen Abweichung einer quer zur Bewegungsrichtung auswandernden Bahn bekannt. Diese Vorrichtung benötigt zwei Kompensationsfelder um bei der Bahn die Lichtdurchlässigkeit zu messen, die als Differenzmessung herangezogen wird. Eine Erfassung des Querschnitts bzw. der Formdimension eines Extrudates kann mit dieser Vorrichtung nicht vorgenommen werden, da diese funktionell nur zur Feststellung der Lage von flächigen Objekten, wie z.B.ßFolien oder Papierbahnen benutzt werden kann.

Aus der DE-A 2 913 410 ist eine lichtleitelektrische Meßeinrichtung zur wertmäßigen Erfassung einer Lage einer Kante eines Bogens auf einer Fläche einer Bogenrotationsdruckmaschine bekannt. Mit einer solchen Meßeinrichtung ist lediglich eine sehr ungenaue digitale Messung möglich. Zwischenschritte, also eine Analogmessung ohne Teilsprünge zur Gewinnung von Meßdaten können mit dieser Einrichtung nicht vorgenommen werden.

Aufgabe der Erfindung ist es, ein Verfahren und eine Vorrichtung der genannten Art anzugeben, die bei unaufwendigem Aufbau eine präzise, schnelle Erfassung der Position einer Kante des Strangprofils in der Materialaufquellung hinter der Extruderdüse bzw. im Materialstau vor dem Kalibrierwerkzeug ermöglicht.

Diese Aufgabe wird durch ein Verfahren gemäß des Anspruchs 1 und einer Vorrichtung zur Durchführung des Verfahrens gemäß des Anspruchs 2 gelöst. Besondere Ausführungsmerkmale sind in den Unteransprüchen gekennzeichnet.

Das erfindungsgemäße Verfahren und die vorgeschlagene Vorrichtung bietet alle Vorteile der berührungslosen optischen Erfassung der Materialquellung hinter der Extruderdüse bzw. des Materialstaus vor dem Kalibrierwerkzeug. Insbesondere eignet sich die erfindungsgemäße Vorrichtung zum Erfassen der Materialaufquellung direkt hinter der Extruderdüse bei der Herstellung von Profilen aus weichen Kunststoffen, beispielsweise aus Weich-PVC, was bei der herkömmlichen, auf Materialberührung angewiesenen Geräten nicht möglich war, da bei der Herstellung von Weichkunststoff-Extrudaten keine Kalibrierung verwendet werden kann. Die Messung erfolgt insbesondere ohne mechanische Beeinflussung des Strangprofils. Sie ist unempfindlich gegen äußere Einflüsse wie Vibrationen, Staub usw., und sie ermöglicht einen robusten, weitgehend wartungsfreien Aufbau. Die Verwendung einer Lichtleitelementenoptik ermöglicht es, die Lichtsende- und Lichtempfangsfläche in unmittelbarer Nähe der zu erfassenden Materialquellung bzw. des Materialstaus hinter der Extruderdüse bzw. direkt vor dem Eingang des Kalibrierwerkzeugs anzubringen, was mögliche Störeinflüsse minimiert. Der Meßkopf kann sehr schmal gehalten werden, so daß er auch in kleine Spalte zwischen Strangpreßwerkzeug und Kalibrierwerkzeug paßt. Lichtsender und -detektor können ohne räumliche Beengung in einigem Abstand von der Materialquellung bzw. dem Materialstau untergebracht sein, was auch aus Temperaturgründen von Vorteil ist. In Kunststoff-Strangpreßtechnik können vor dem Kalibrierwerkzeug Temperaturen bis ca. 380°C herrschen. Geeignete Lichtleitelemente halten dem leicht stand, während sich die temperaturempfindlichere Lichtsender- und -detektoranordnung vorzugsweise in einigem Abstand an einer kühleren Stelle befinden sollte. Die erfindungsgemäße Aufteilung der Lichtempfangsfläche in mehrere Felder mit je einer Mehrzahl von Lichtleitelementen ermöglicht eine schnelle, präzise Lageerfassung einer im Bereich der Materialaufquellung bzw. des Materialstaus liegenden Kante des Strangprofils. Man kann mit einem logischen Ja/Nein-Signal oder Digitalsignal zunächst das Feld identifizieren, in das die Kante fällt, und so eine Grobinformation für die Größe der Materialaufquellung bzw. des Materialstaus gewinnen, anhand derer man starke Schwankungen der Quellung bzw. des Staus schnell ausregeln kann. Die Mehrzahl einzelner Lichtleitelementeenden in jedem Feld ermöglicht es, ein quasi analoges Signal für die Position der Kante innerhalb des Feldes abzuleiten. Es ist so eine Feinbestimmung der Kantenposition und vorzugsweise unter im wesentlichen stationären Betriebsbedingungen eine genaue Einstellung der Materialquellung bzw. des Materialstaus auf den gewünschten Sollwert möglich.

Die Felder der Lichtempfangsfläche können rechteckigen Grundriß haben und unmittelbar aneinander angrenzen. Vorzugsweise sind nebeneinander und um eine halbe Feldlänge versetzt zwei parallele Zeilen von Feldern angeordnet. Durch diese Staffelung von Feldern gibt es stets ein Feld, in dessen Mittelbereich die zu detektierende Kante des Strangprofils fällt; durch die Feldgrenzen treten also keine Lücken oder blinde Flecken in der Detektionsfläche auf. Weiter erhält man zwei logische Signale, die je ein Feld der benachbarten Zeilen identifzieren, in das die zu messende Kante des Strangprofils fällt. Anhand dieser beiden Signale ist eine grobe Positionsmessung der Kante mit der Genauigkeit einer halben Feldteilung möglich.

Die Lichtempfangsfläche kann ein von den übrigen Feldern vorzugsweise beabstandetes Kompensationsfeld enthalten, auf dessen Höhe im Betrieb keine Kante des Strangprofils zu liegen kommt, und das zur Erfassung eines Referenzpegels der Lichtintensität dient. Anhand dieses Kompensationsfelds können Schwankungen der emittierten und detektierten Lichtintensität ausgeregelt werden, die nicht durch die Materialquellung bzw. den Materialstau bedingt sind. Insbesondere wird so eine sich ändernde optische Dämpfung kompensiert, die bei Bewegung oder Verformung der Lichtleitelemente auftritt. Desweiteren erfolgt eine Kompensation von Intensitätsschwankungen des Lichtsenders sowie des altersbedingten Nachlassens von Lichtsender und Lichtempfänger , und nicht zuletzt läßt sich die optische Absorption von Belägen, z.B. Staub, auf der Lichtsende- und -empfangsfläche kompensieren. Im Ergebnis wird eine hohe Empfindlichkeit und Störunanfälligkeit der erfindungsgemäßen Vorrichtung erzielt. Sie ist überraschenderweise geeignet, auch Strangprofile aus lichtdurchlässigem oder durchscheinendem Material zu erfassen, wobei man dem unterschiedlichen Absorbtionsverhalten dieser Materialien in verschiedenen Spektralbereichen durch Wahl einer geeigneten Licht wellenlänge für die Messung Rechnung trägt. Weiter nutzt man aus, daß die Strangprofile im Kantenbereich eine größere optische Dichte haben. Dieser technische Fortschritt ist überraschend und sprunghafter Natur.

Die Lichtsendefläche kann eine länglich-rechteckige Gestalt und in etwa gleiche Größe wie die Lichtempfangsfläche einschließlich des Kompensationsfelds haben. Man erreicht so bei geringem konstruktivem Aufwand eine gute Ausleuchtung der Lichtempfangsfläche.

Die Erfindung wird im folgenden anhand eines in den Zeichnungen dargestellten Ausführungsbeispiels näher erläutert. Schematisch zeigen:

Figur 1 den Abschnitt einer Anlage zur Herstellung von Strangprofilen mit einer erfindungsgemäßen Vorrichtung, die die Materialaufquellung hinter der Extruderdüse erfaßt;

Figur 2 einen Meßkopf und ein Gehäuse der Vorrichtung, die über ein Lichtleiterkabel verbunden sind;

Figur 3 eine vergrößerte Vorderansicht ·des Meßkopfes;

Figur 4 eine Seitenansicht des Meßkopfes mit Blick in Richtung IV von Figur 3;

Figur 5 eine Lichtsendefläche des Meßkopfes in Ansicht V von Figur 3 und

Figur 6 eine Lichtempfangsfläche des Meßkopfs in Ansicht VI von Figur 3.

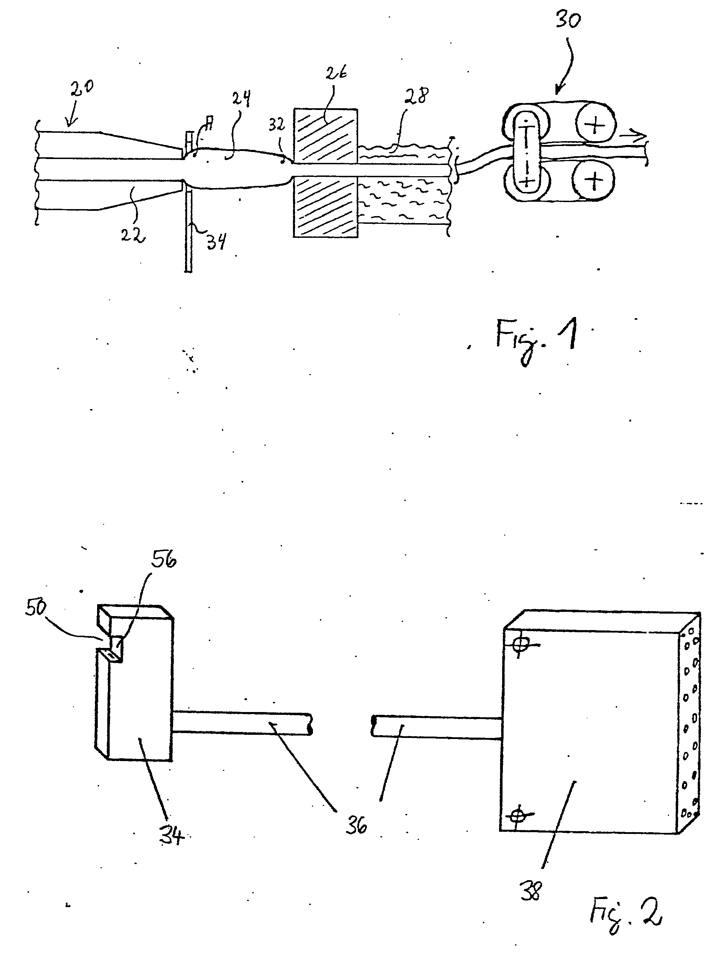

Figur 1 zeigt schematisch den Abschnitt einer Anlage zur Herstellung von Strangprofilen aus Kunststoff. Man erkennt ein Strangpreßwerkzeug 20 in Gestalt eines Düsenextruders, aus dessen Düse 22 ein entsprechend der Düsenmündung geformtes Strangprofil 24 austritt. Bei dem Strangprofil 24 kann es sich um ein Vollprofil oder Hohlprofil von beliebigem Grundriß handeln. Das Strangprofil 24 wird in einem Kalibrierwerkzeug 26 kalibriert und dadurch auf sein endgültiges Außenmaß gebracht. Das Kalibrierwerkzeug 26 hat eine Öffung, die üblicherweise im wesentlichen der Düsenmündung entsprechend gestaltet und gegebenenfalls im Querschnitt etwas geringer ist. An das Kalibrierwerkzeug 26 schließt sich eine Kühlstrecke 28 an. Weiter stromab erkennt man eine Abzugsvorrichtung 30, die das Strangprofil 24 von dem Kalibrierwerkzeug 26 abzieht und üblicherweise einer Schneid- und Stapelvorrichtung überstellt.

Das extrudierte Strangprofil 24 bildet hinter der Extruderdüse 22 eine Materialaufquellung A und vor dem Eintritt in das Kalibrierwerkzeug 26 einen Materialstau 32. Für jedes Profil gibt es eine optimale Einstellung der Materialaufquellung A bzw. des Materialstaus 32, die sich empirisch bestimmen läßt und im laufenden Betrieb möglichst genau eingehalten werden soll. Hierzu dient ein Regler mit einem Meßkopf 34, der z.B. unmittelbar hinter der Extruderdüse bzw. unmittelbar vor dem Eingang des Kalibrierwerkzeugs 26 angeordnet ist. Mit dem Meßkopf 34 wird die sich momentan ausbildende Aufquellung A bzw. der Materialstaub 32 berührungslos optisch erfaßt. Ein entsprechender Meßwert des Meßkopfes 34 wird mit einem vorgegebenen Sollwert verglichen, der der gewünschten optimalen Einstellung der Materialaufquellung A bzw. des Materialstaus 32 entspricht, und es wird ein entsprechendes Regelsignal abgeleitet. Letzteres dient dazu, geeignete Betriebskenngrößen der Anlage zu beeinflussen, um den tatsächlichen Wert der Materialaufquellung A bzw. des Materialstaus 32 zu vergrößern oder zu verkleinern; insbesondere kann die Drehzahl einer Extruderschnecke in dem Strangpreßwerkzeug 20 und/oder die Transportgeschwindigkeit der Abzugsvorrichtung 30 verändert werden.

Bezugnehmend auf Figur 2 ist der Meßkopf 34 über ein Lichtleitkabel 36 mit einem Gehäuse 38 verbunden. Das Gehäuse 38 enthält einen Lichtsender und einen Lichtempfänger. Unter Licht soll elektromagnetische Strahlung im sichtbaren Spektralbereich und benachbarten Spektralbereichen, d.h. Infrarotstrahlung und ultraviolette Strahlung, verstanden werden. Bevorzugt wird Infrarotstrahlung. Für diese stehen unaufwendige Strahlungsquellen, insbesondere in Form von Leuchtdioden und Lasern und unaufwendige Detektoren, beispielsweise in Form von Fotodioden, zur Verfügung. Infrarotstrahlung läßt sich über eine übliche Lichtleitelementenoptik leiten, die den Vorteil einer guten Temperaturbeständigkeit hat.

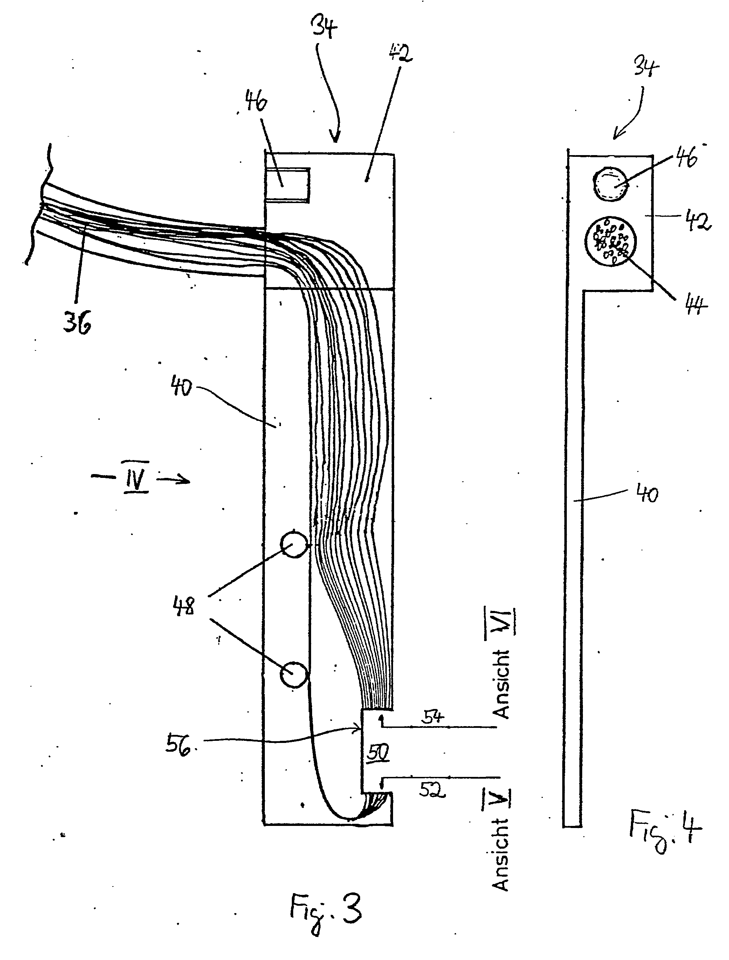

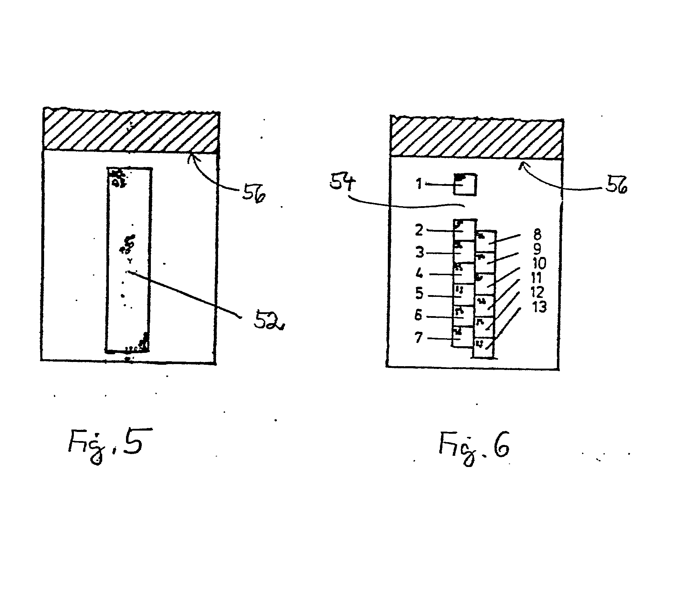

Einzelheiten des Meßkopfes 34 sind Figur 3 und 4 zu entnehmen. Der Meßkopf 34 hat ein Flachteil 40 von rechteckigem Grundriß, an dessen einem Ende sich ein quaderförmiger Ansatz 42 befindet. In diesen tritt bei 44 das Lichtleitkabel 36 ein. Weiter ist der Ansatz 42 mit einer Sackgewindebohrung 46 versehen, die zur Montage des Meßkopfes 34 auf einer Stativstange o.ä. dient. Weitere Befestigungspunkte 48 zur unmittelbaren Anbringung des Meßkopfes 34 an der Düse 22 oder dem Kalibrierwerkzeug 26 sind im Bereich des Flachteils 40 vorgesehen.

An dem dem Ansatz 42 abgewandten Ende des Flachteils 40 ist seitlich ein rechteckiger Einschnitt 50 vorgesehen, durch den der Meßkopf 34 eine Gabelform erhält. An den sich quer zu der Längsrichtung des Flachteils 40 erstreckenden Seitenflächen des Einschnitts 50 befindet sich eine Lichtsendefläche 52 und eine Lichtempfangsfläche 54, die einander im Abstand gegenüberliegen. An den Flächen endet jeweils eine Vielzahl einzelner Elemente des Lichtleitkabels 36. Die Elemente sind von der Gehäuseeintrittsfläche 44 durch das Flachteil 40 hindurch an Lichtsendeflächen 52 bzw. Lichtempfangsflächen 54 geführt, und sie können insbesondere in das Flachteil 40 eingebettet sein. Die an der Lichtsendefläche 52 endenden Elemente führen Licht, das sie von dem Lichtsender in dem Gehäuse 38 erhalten; dieses Licht wird an den Enden der Elemente in Richtung hin auf die Lichtempfangsfläche 54 abgestrahlt. Die dort endenden Elemente nehmen Licht auf und führen es an den Lichtdetektor in dem Gehäuse 38, wobei an geeigneter Stelle, insbesondere unmittelbar vor dem Lichtdetektor, ein Filter eingeschaltet sein kann. Insbesondere im Fall einer Messung mit Infrarotlicht kann ein solches Filter dazu dienen, Taglichteinflüsse, wie Schwankungen der Raumlichthelligkeit usw. auszuschalten, wodurch sich eine entsprechende erhöhte Meßgenauigkeit ergibt.

Figur 5 zeigt eine Draufsicht auf die Lichtsendefläche 52. Diese hat einen länglich-rechteckigen Grundriß, und sie ist durchgehend mit Enden von Lichtleitelementen belegt.

Figur 6 zeigt eine entsprechende Draufsicht der Lichtempfangsfläche 54. Diese ist in eine Mehrzahl einzelner Felder unterteilt, an denen jeweils mehrere Lichtleitelemente enden. Die Felder sind quadratisch. Nahe dem Rücken 56 des Einschnitts 50 befindet sich ein einzelnes Feld 1, das im folgenden als Kompensationsfeld bezeichnet wird. Das Kompensationsfeld 1 liegt kolinear und in einigem Abstand zu einer Zeile von Feldern 2, 3, 4, 5, 6, 7, die unmittelbar aneinander angrenzen. Direkt neben dieser Zeile liegt eine zweite Zeile von Feldern 8, 9, 10, 11, 12, 13, die ebenfalls unmittelbar aneinander angrenzen und gegen die Felder 2, 3, 4, 5, 6, 7 um eine halbe Feldlänge versetzt sind. Ein die Gesamtheit der Felder 1 bis 13 einschließendes Rechteck hat in etwa dieselbe Größe, wie die Lichtsendefläche 52.

Lichtsendefläche 52 und Lichtempfangsfläche 54 bilden eine Lichtschranke, die im laufenden Betrieb eine Kante des Strangprofils im Bereich der Materialaufquellung bzw. des Materialstaus 32 vor dem Kalibrierwerkzeug 26 erfaßt. Die Kante kommt dabei auf der Höhe der Felder 2 bis 13 zu liegen, während das Kompensationsfeld 1 eine von dem Materialstrom nicht beeinflußte Lichtintensität empfängt. Man erhält dadurch ein Differenzsignal, das es erlaubt, Schwankungen der Lichtintensität, ein alterungsbedingtes Nachlassen von Lichtsender oder Lichtdetektor optische Absorptiion durch einen sich auf Lichtsendefläche 52 oder Lichtempfangsfläche 54 niederschlagenden Belag usw. zu kompensieren.

Anhand der Lichtintensität auf den übrigen Feldern 2 bis 13 gewinnt man ein erstes Signal, das das Feld identifiziert, auf dessen Höhe die zu erfassende Kante des Strangprofils liegt. Aufgrund der Staffelung der Felder 2 bis 7 und 8 bis 13 gibt es immer ein Feld, in dessen Mittelbereich die Kante liegt. Normalerweise wird in beiden Feldzeilen 2 bis 7 und 8 bis 13 je ein Feld identifiziert, auf dessen Höhe die Profilkante liegt. Die Staffelung der Felder erlaubt so eine gerasterte Lagebestimmung mit der Genauigkeit einer halben Feldlänge. Es ist eine schnelle Signalverarbeitung möglich, da zur Identifizierung der Felder ein logisches Ja/Nein-Signal oder Digitalsignal ausreicht. Zur Feinmessung der Profilkantenhöhe wird ein zweites Signal abgeleitet, das für die Höhe der Profilkante innerhalb eines identifizierten Felds charakteristisch ist. Man erhält dieses Signal anhand der unterschiedlichen Lichtintensität an den Lichtleiterelementen, die an dem fraglichen Feld enden.

Liste der Bezugszeichen

A Materialaufquellung hinter der Extruderdüse
1 Kompensationsfeld
2-13 Felder
20 Strangpreßwerkzeug
22 Extruderdüse
24 Strangprofil
26 Kalibrierwerkzeug
28 Kühlstrecke
30 Abzugsvorrichtung
32 Materialstau
34 Meßkopf
36 Lichtleitkabel
38 Gehäuse
40 Flachteil
42 Ansatz
44 Gehäuseeintrittsfläche
46 Sackgewindebohrung
48 Befestigungspunkt
50 Einschnitt
52 Lichtsendefläche
54 Lichtempfangsfläche
56 Rücken

**Patentansprüche**

1. Verfahren zur Steuerung einer Anlage für die Herstellung von Strangprofilen, insbesondere Kunststoffprofilen oder dergleichen die ein Strangpresswerkzeug und ein diesem im Materialstrom nachgeordnetes Kalibrierwerkzeug enthält, wobei mit einem Meßkopf, mit gegenüberliegender Lichtsende- und Lichtempfangsfläche mit einer Mehrzahl in diese endenden Lichtleitelementen der Materialstau bzw. die Materialaufquellung zwischen der Extrusionsdüse und dem Kalibrierwerkzeug berührungslos optisch erfaßt wird, dadurch gekennzeichnet, daß mittels einer in eine Mehrzahl von Feldern unterteilten Lichtempfangsfläche, deren einzelnen Felder jeweils eine Mehrzahl von Lichtleitelementen aufweist, die Position der Kante des Materialstaus bzw. der Materialaufquellung mittels eines Digitalsignals zur Feldindentifizierung in der die Kante liegt und die Positionserkennung der Kante innerhalb eines Feldes mittels eines quasi Analogsignals erfolgt, wobei Schwankungen der emittierten und detektierten Lichtintensität durch ein Kompensationsfeld ausgeregelt werden.

2. Vorrichtung zur Durchführung des Verfahrens nach Anspruch 1, dadurch gekennzeichnet, daß die Lichtempfangsfläche (54) aus einem Kompensationsfeld (1) und einer Mehrzahl von Feldern (2 bis 13) unterteilt ist, an denen jeweils eine Mehrzahl Lichtleitelemente enden, und das die Vorrichtung ein erstes Signal zur Identifizierung wenigstens eines Feldes (2 bis 13), auf dessen Höhe eine Kante des Strangprofiles im Bereich zwischen der Extrusionsdüse und Kalibrierwerkzeug zu liegen kommt, und ein zweites Signal zur Erfassung der Position der Kante innerhalb dieses Feldes (2 bis 13) bereitstellt.

3. Vorrichtung nach Anspruch 2, dadurch gekennzeichnet, daß die Felder (1 bis 13) rechteckigen Grundriß haben.

4. Vorrichtung nach Anspruch 2 bis 3, dadurch gekennzeichnet, daß die Felder (1 bis 13) unmittelbar aneinander angrenzen.

5. Vorrichtung nach einem der Ansprüche 2 bis 4, dadurch gekennzeichnet, daß nebeneinander und um eine halbe Feldlänge versetzt zwei parallele Zeilen von Feldern angeordnet sind.

6. Vorrichtung nach einem der Ansprüche 2 bis 5, dadurch gekennzeichnet, daß die Lichtempfangsfläche (54) ein von den übrigen Feldern (2 bis 13) vorzugsweise beabstandetes Kompensationsfeld (1) enthält, auf dessen Höhe im Betrieb keine Kante des Strangprofils zu liegen kommt und das zur Erfassung eines Referenzpegels der Lichtintensität dient.

7. Vorrichtung nach einem der Ansprüche 2 bis 6, dadurch gekennzeichnet, daß die Lichtsendefläche (52) eine länglich-rechteckige Gestalt und in etwa die gleiche Größe wie die Lichtempfangsfläche (54) einschließlich des Kompensationsfelds (1) hat.

**Claims**

1. Procedure for the control of an apparatus for the production of cord profiles, in particular plastic profiles or the like, which contains a cord press-tool and a subsequently arranged, in the material stream, calibrating tool,
whereby with the measuring head, with opposing light-end and light-receiving area with the multitude of light conducting elements ending in those,
the material jam and/or the material extension between the extur, sion nozzle and the calibration tool is captured optically without touching, characterised in that by means of a light receiving area divided into a multitude of areas, the singular areas each feature a multitude of light carrier elements, the position of the corner of the material jam and/or the material extension takes place by means of a digital signal for the field identification in which the corner is located and the recognition of position of the corner within a field by means of a quasi-analog signal,
whereby variations of emitted and detected light intensity are regulated by means of a compensation field.

2. Apparatus for carrying out the process according to claim 1, characterised in that the light receiving area (54) is subdivided into a compensation field (1) at the multitude of area (2 till 13),
on which each the multitude of light receiving elements and, that the apparatus presents first signal for the identification of at least one field (2 till 13), at the height of which a corner of the cord profile in the area between the extrusion nozzle and the calibrating tool comes to rest,
and a second signal for the capture of the position of the corner within this field (2 till 13).

3. Apparatus according to claim 2, characterised in
that the fields (1 til 13) have a rectangular form.

4. Apparatus according to claim 2 till 3, characterised in
that the fields (2 till 13) are immediately adjacent to each other.

5. Apparatus according to one of a claims 2 till 4, characterised in
that side by side and displaced by half a field length two parallel rows of fields are arranged.

6. Apparatus according to one of claims 1 till 5, characterised in
that the light receiving area (54) contains a compensation field (1) preferably distant from the other fields (2 till 13),
at the height of which in operation the corner of the cord profile comes to rest and serves for the reception of a reference label for the light intensity.

7. Apparatus according to one of claims 2 till 6, characterised in
that the light end area (52) has a longitudinal rectangular form and approximately the same size as the light-receiving area (54) including the compensation field (1).

## Revendications

1. Procedure pour la contrôle d'une installation pour la production des profiles de corde, en particulier des profiles de plastique et de telles choses, qui contient un outil de corde estampé (comprimé) et un outil de calibration subsequent en courant de matériaux, ou on reçoit optiquement avec une pièce de mésure avec fin de lumière opposant et surface de réception de lumière avec une plupart d'éléments de conduite de la lumière y terminant le bouchon de matériaux ou l'expansion de materiaux entre le buse d'extrusion et l'outil de calibration sans toucher, charactérisé
en ce que au moyen d'une surface de réception de lumière divisée dans une plupart de compartiments, ou chaque compartiment a une plupart d'éléments de conduite de lumière, la position de la carne du boucher de matériaux ou de l'expansion de matériaux au moyen d'un signal digital pour l'identification du compartiment est situé dans la carne et l'identification de la position de la carne prends place dans un compartiment au moyen d'un signal quasi-analog,
réglant des variations de l'intensité de lumière émitté et détecté par un compartiment de compensation.

2. Appareil pour la réalisation de la procédure selon révendication 1, caractérisé
en ce que la surface de réception de lumière (54) est séparée dans un compartiment de compensation (1) et une plupart de compartiment (2 à 13),
ou chaque fois une plupart d'éléments de conduite de lumière se terminent, et que l'appareil approvisionne un premier signal pour l'identification au moins d'un compartiment (2 à 13), à l'altitude de celui une carne de profile de cord sera située dans la domaine entre le buse d'extrusion et l'outil de calibration et un signal second pour réception de la position de la carne dans ce compartiment (2 à 13).

3. Appareil selon revendication 2, caractérisé, en ce que les compartiments (2 à 13) ont un plan rectangulaire.

4. Appareil selon revendication 2 à 3, caractérisé
en ce que les compartiments (2 à 13) s'avoisinent immédiatement.

5. Appareil selon une des revendications 2 à 4, caractérisé
en ce que avoisinant et déplacé par une demie-longue de compartiment deux rangées parallèles de compartiments sont arrangées.

6. Appareil selon une des revendications 2 à 5, caractérisé en ce que la surface de réception de lumière (54) contient un compartiment de compensation preférablement distancé des autres compartiments (2 à 13),
à l'altitude de celui en opération aucune carne de profile de cord est située
et qui serve pour le récensement d'un niveau de référence de l'intensité de lumière.

7. Appareil selon une des revendications 2 à 6, caractérisé
en ce que la surface d'émission de lumière a une form longitudinal-rectangulaire
et en environ la même dimension comme la surface de réception de lumière (54) inclusivement du compartiment de compensation (1).

Fig. 1

Fig. 2

Fig. 3

Fig. 4

Fig. 5

Fig. 6